# EUROPÄISCHE PATENTSCHRIFT

(11) **EP 3 148 917 B1**
(45) Veröffentlichungstag und Bekanntmachung des Hinweises auf die Patenterteilung: **02.05.2018**
(21) Anmeldenummer: 15721278.8
(22) Anmeldetag: 13.05.2015
(51) Int. Cl.: B66B 23/10, B65G 17/06, B66B 23/14, B66B 29/00

(54) **BEFESTIGUNGSVORRICHTUNG ZUM BEFESTIGEN EINER PALETTE AN EINEM ZUGMITTEL**
FIXING DEVICE FOR FIXING A PALLET TO A MEANS OF TRACTION
DISPOSITIF DE FIXATION D'UNE PALETTE À UN MOYEN DE TRACTION

(30) Priorität: 28.05.2014 EP 14170277
(43) Veröffentlichungstag der Anmeldung: 05.04.2017
(73) Patentinhaber: Inventio AG, 6052 Hergiswil (CH)
(72) Erfinder: MATHEISL, Michael, A-2331 Vösendorf (AT); SCHULZ, Robert, A-1100 Wien (AT); EIDLER, Werner, A-2013 Göllersdorf (AT); ILLEDITS, Thomas, A-2491 Neufeld (AT)
(86) Internationale Anmeldenummer: PCT/EP2015/060614
(87) Internationale Veröffentlichungsnummer: WO 2015/180964

(56) Entgegenhaltungen:
- WO-A1-97/29987
- DE-A1- 1 756 813
- JP-A- 2003 226 481
- US-A- 2 059 063
- US-A- 3 782 533

## Beschreibung

Die Erfindung betrifft eine Befestigungsvorrichtung zum Verbinden einer Palette eines Fahrsteiges mit einer als Zugmittel dienenden Gelenkkette.

Fahrsteige sind allgemein bekannte und effiziente Einrichtungen zum Transportieren von Personen. Sie werden typischerweise zum Transport von Personen in horizontaler Richtung, aber auch in vertikaler Richtung mit leichter Steigung bis zu 12° verwendet, wenn sie beispielsweise von einem Stockwerk eines Gebäudes zu einem anderen Stockwerk Benutzer mit Einkaufswagen befördern soll. Die Länge und die Breite des Fahrsteiges werden in Abhängigkeit vom erwarteten Passagierverkehr bei der jeweiligen Anwendung ausgewählt.

Paletten werden als einstückige oder mehrteilige Bauteile konzipiert und deren Teile in der Regel durch Gußverfahren, Strangpreßverfahren, Schmiedeverfahren und dergleichen mehr hergestellt. Mehrere Paletten werden üblicherweise mittels zweier Zugmittel zu einem Palettenband eines Fahrsteiges verbunden. In der Regel sind diese Zugmittel Gelenkketten. Ein Fahrsteig weist meistens ein Tragwerk beziehungsweise Fachwerk mit zwei Umlenkbereichen auf, zwischen denen das Palettenband umlaufend geführt ist.

Die Verbindung zwischen der Gelenkkette und der Palette muss sicher und dauerhaft sein, da ein Lösen der Verbindung und damit der Palette vom Palettenband während des Betriebes des Fahrsteiges katastrophale Folgen für die Benutzer haben kann.

In der US 4 244 457 A und US 3 782 533 werden verschiedene Befestigungsvorrichtungen offenbart, um eine Palette eines Fahrsteiges an einer Gelenkkette zu befestigen. Alle diese Befestigungsvorrichtungen weisen die Nachteile auf, dass sie recht aufwändig zu fertigen und/oder montieren sind und nach der Montage beziehungsweise während des Betriebes des Palettenbandes eine Überprüfung der Befestigungsvorrichtung auf Beschädigungen oder Bruch sehr erschwert ist. Insbesondere zwischen den Kettengliedern angeordnete Befestigungsvorrichtungen sind schwierig zu montieren und in eingebautem Zustand kaum oder gar nicht überprüfbar.

Aufgabe der vorliegenden Erfindung ist daher, eine Befestigungsvorrichtung zum Verbinden einer Palette mit einer als Zugmittel dienenden Gelenkketten zu schaffen, welche einfach montierbar, kostengünstig herstellbar und in montiertem Zustand beziehungsweise im Betrieb auf einfache Weise überprüfbar ist.

Diese Aufgabe wird gelöst durch ein Palettenband eines Fahrsteiges mit in Bewegungsrichtung hintereinander angeordneten Paletten, die zwischen zwei zueinander parallel verlaufenden, aus unterschiedlich breiten Kettengliedern gebildeten Gelenkketten angeordnet sind. Jedes Kettenglied ist mittels mindestens einer Befestigungsvorrichtung mit einer der Paletten verbunden. Die Befestigungsvorrichtung weist einen Befestigungsbolzen und eine Topfscheibe auf, wobei die Topfscheibe einen Topfbodenring und einen den Topfbodenring umlaufenden Topfrand beziehungsweise Topfkragen beinhaltet. Die Innenhöhe des Topfrandes entspricht der Dicke zumindest einer Kettenlasche des Kettengliedes. Zudem ist der Innendurchmesser des Topfrandes grösser als der Außendurchmesser des in montiertem Zustand am Topfbodenring anliegenden Bereichs des Befestigungsbolzens.

Die Topfscheibe mit ihrer auf die Dicke der Kettenlasche abgestimmten Innenhöhe und mit ihrem auf den Befestigungsbolzen abgestimmten Innendurchmesser ermöglicht, dass dieselbe Befestigungsvorrichtung zwischen schmalen und breiten Kettengliedern der Gelenkkette und der daran zu befestigenden Paletten eingesetzt werden kann. Ferner führt die Verwendung der Topfscheibe auch dazu, dass alle Teile der Befestigungsvorrichtung sichtbar bleiben und alle Bolzenenden der Befestigungsbolzen eines Palettenbandes gleich weit aus den Verbindungsstellen zwischen Gelenkkette und Paletten herausragen. Diese Eigenschaft ermöglicht eine äußerst zuverlässige und einfache visuelle Überprüfung aller Befestigungsvorrichtungen eins Palettenbandes, da weder die Topfscheibe noch das Ende des Befestigungsbolzens durch Bereiche der Gelenkkette und/oder der Palette vollständig verborgen werden. Sobald das Bolzenende eines Befestigungsbolzens über die anderen Bolzenenden des Palettenbandes hinausragt, ist dies sofort erkennbar. Selbstverständlich kann die Überprüfung der Bolzenenden auch mittels Sensoren erfolgen, wobei pro Bolzenenden-Reihe eines Palettenbandes nur ein Sensor erforderlich ist.

Die Überprüfung der Bolzenenden ist besonders einfach, wenn diese aus der den Paletten abgewandten Seite der Gelenkkette beziehungswese deren Kettenlasche herausragen. Um dies zu erreichen, durchdringt vorzugsweise in montiertem Zustand der Befestigungsbolzen zumindest zwei parallel zueinander angeordnete Kettenlaschen des mit der Palette zu verbindenden Kettengliedes.

Da eine Gelenkketten konstruktionsbedingt zumindest zwei unterschiedliche Gruppen von Kettengliedern aufweist die sich primär in ihrer Breite unterscheiden, kann die Topfscheibe derart zwischen dem Bolzenkopf des Befestigungsbolzens und der der Palette abgewandten Kettenlasche der Gelenkkette angeordnet werden, dass bei schmalen Kettengliedern der Topfrand und bei breiten Kettengliedern der Topfbodenring an der Kettenlasche des jeweiligen Kettengliedes anliegt.

Üblicherweise weisen die Gelenkketten nur schmale und breite Kettenglieder auf, die alternierend einander nachfolgend angeordnet und in den Gelenkstellen der Gelenkkette miteinander verbunden sind. Wenn die Topfscheiben derart an der Gelenkkette alternieren angeordnet sind, dass bei schmalen Kettengliedern der Topfrand und bei breiten Kettengliedern der Topfbodenring an der Kettenlasche des jeweiligen Kettengliedes anliegt, ragen alle Bolzenköpfe unter der Vernachlässigung des Axialspiels der Gelenkkette gleich weit aus der Gelenkkette heraus.

Die Palette lässt sich am einfachsten direkt an der Gelenkkette befestigen, wenn der Befestigungsbolzen eine dem Kettenglied zugewandte Wange der an diesem Kettenglied befestigten Palette durchdringt oder in eine Bohrung der an diesem Kettenglied befestigten Palette hineinragt. Die Bohrung kann beispielsweise eine Durchgangsbohrung, eine Sacklochbohrung oder eine Gewinde-Sacklochbohrung sein. Weitere Möglichkeiten sind an der Wange ausgebildete Nuten, Schlitze, Öffnungen, Durchbrüche und dergleichen mehr, damit der Befestigungsbolzen die Wange durchdringen kann.

Zwischen den schmalen Kettengliedern und den daran befestigten Paletten kann jeweils ein Distanzelement angeordnet sein, dessen Dicke der Dicke einer Kettenlasche entspricht. Dadurch können identisch gefertigte Paletten sowohl an den breiten Kettengliedern als auch an den schmalen Kettengliedern befestigt werden.

An dem Bolzenkopf gegenüberliegenden Ende des Befestigungsbolzens kann ein Gewinde ausgebildet sein, welches in die weiter oben erwähnte Gewinde-Sacklochbohrung eingeschraubt wird oder, wenn der Befestigungsbolzen die Wange der Palette durchdringt, beispielsweise eine Schraubenmutter aufnimmt. Die beste Sicherung von lösbaren Schraubverbindungen kann damit erreicht werden dass eine möglichst große Dehnlänge innerhalb der Verschraubung vorhanden ist. Besonders vorteilhaft sind hierbei die die Kettenlaschen eines Kettengliedes durchdringenden Befestigungsbolzen. Bei diesen kann die ganze Schaftlänge des Befestigungsbolzens, die zwischen den beiden außenliegenden Kettenlaschen eines Kettengliedes vorhanden ist, als Dehnlänge ausgenutzt werden. Damit aber die Kettenglieder beim Anziehen des Befestigungsbolzens nicht seitlich zusammengedrückt werden, kann zwischen den beiden außenliegenden Kettenlaschen des jeweiligen Kettengliedes jeweils mindestens eine Stützhülse angeordnet sein, durch deren Bohrung der Befestigungsbolzen hindurchsteckbar ist.

Zur Vereinfachung der Montage kann zudem bei den schmalen Kettengliedern das weiter oben beschriebene Distanzelement mittels der Stützhülse am Kettenglied befestigt werden.

Um die Reibung beim Umlauf des Palettenbandes zu reduzieren, kann jede der Gelenkketten Laufrollen aufweisen. Diese sind vorzugsweise im Bereich der Gelenkstellen am Zugmittel angeordnet. Dies hat den Vorteil, dass die in den Gelenkstellen verwendeten Verbindungsbolzen der Gelenkkette gleichzeitig auch als Laufrollenachsen dienen. Die Laufrollen können zwischen den Kettenlaschen in den Gelenkstellen der Gelenkkette angeordnet sein. Selbstverständlich kann jede der Gelenkketten auch Laufrollen aufweisen, die an der den Paletten abgewandten Außenseite der Kettenglieder und damit seitlich des Palettenbandes in den Gelenkstellen angeordnet sind. Dadurch können an bestehenden Anlagen beschädigte Laufrollen gegen neue Laufrollen ausgetauscht werden, ohne dass die Gelenkkette ausgebaut werden muss, wie dies bei Gelenkketten mit zwischen den Kettengliedern angeordneten Laufrollen erforderlich ist. Um die Kontrolle beziehungsweise die Überwachung der Befestigungsbolzen zu erleichtern, überragen vorzugsweise die Befestigungsbolzen die Laufrollen seitlich.

Die in seitlicher Richtung aus der Gelenkkette herausragenden, beziehungsweise orthogonal zur Förderrichtung des Palettenbandes sich erstreckenden Befestigungsbolzen können zusätzlich genutzt werden. Da die Bolzenenden (Bolzenköpfe und die den Bolzenköpfen gegenüberliegenden Bolzenenden) der Befestigungsbolzen bezogen auf die Förderrichtung alle in einer Linie sind, können die Befestigungsbolzen auch als Führungselemente genutzt werden. Dazu stehen verschiedene Möglichkeiten offen. Zum Beispiel kann ein Gleitelement mit niedrigem Gleitreibungskoeffizient an einem Bolzenende mindestens eines Befestigungsbolzens angeordnet sein. Selbstverständlich können die Bolzenenden auch beschichtet sein, beispielsweise mit einem Gleitlack oder mit einer Kunststoffbeschichtung. Eine weitere Möglichkeit bestünde darin, im Bolzenkopf eine stirnseitig herausragende Rollkugel einzulassen.

Selbstverständlich kann das vorangehend beschriebene Palettenband mit der erfindungsgemässen Befestigungsvorrichtung nicht nur in neuen Fahrsteigen verwendet werden. Beispielsweise kann ein bestehender Fahrsteig dadurch modernisiert werden, dass das bestehende Palettenband durch ein erfindungsgemäßes Palettenband ersetzt wird.

In einem Fahrsteig mit dem erfindungsgemässen Palettenband kann außerdem mindestens ein Überwachungssensor vorhanden sein, durch welchen die Position eines Endes des Befestigungsbolzens relativ zur Position einer Kettenlasche des zugehörenden Kettengliedes und relativ zu den Enden der anderen Befestigungsbolzen erfasst werden kann. Dadurch ist gleichzeitig sowohl eine schadhafte Befestigungseinrichtung, als auch der Geradlauf des Palettenbandes erfassbar. Die Position der Enden kann beispielsweise optisch und/oder mechanisch abgetastet werden. Als Überwachungssensoren können alle möglichen Erfassungseinrichtungen wie beispielsweise CCD- Kameras, TOF-Kameras, Lichtschranken, Tastschalter, Laserabtasteinrichtungen, induktive Näherungsschalter und dergleichen mehr eingesetzt werden. Auch Hochfrequenzantennen, durch deren Feldänderung fehlende oder zu weit herausragende Befestigungsbolzen erfassbar sind oder ein RFID- Lesegerät, das fehlende RFID- Tags und damit fehlende, diese RFID-Tags aufweisende Befestigungsbolzen ermittelt, können als Überwachungssensoren eingesetzt werden. Um für die Überwachungssensoren den Kontrast der zu erfassenden Teile der Befestigungsvorrichtung zu erhöhen, können zudem an den Enden der Befestigungsbolzen, an den Kettenlaschen und/oder an den Topfscheiben reflektierende Markierungen angeordnet werden. Eine Drehung des Befestigungsbolzens relativ zur Kettenlasche und/oder Topfscheibe einer Befestigungsvorrichtung könnte dadurch sofort detektiert werden. Selbstverständlich sind auch Markierungen mit Codes, beispielsweise Balken- oder Matrixcodes einsetzbar, die beispielsweise die Bauteilcharakteristika des Befestigungsbolzens, dessen Chargennummer und dergleichen mehr beinhalten können.

Die Anzahl der Überwachungssensoren richtet sich vorzugsweise nach der Anzahl Reihen von Befestigungsvorrichtungen und damit nach der Anzahl Zugmittel eines Palettenbandes. Das Sensorsignal des Überwachungssensors kann in einer Überwachungseinheit mit einem Sollwert beziehungsweise Sollzustand verglichen werden. Die Überwachungseinheit liefert dann eine Information beispielsweise an die Fahrsteigsteuerung oder an den Sicherheitskreis des Fahrsteiges, ob das Palettenband umlaufen darf, oder gebremst, oder gar blockiert werden muss, um Unfälle zu verhindern.

Das Palettenband mit der erfindungsgemässen Befestigungsvorrichtung zum Verbinden einer Palette mit einer als Zugmittel dienenden Gelenkkette wird im Folgenden anhand von Beispielen und mit Bezugnahme auf die Zeichnungen näher erläutert. Darin zeigen:
- Figur 1:: in schematischer Darstellung ein Fahrsteig mit einem Tragwerk und zwei Umlenkbereichen, wobei im Tragwerk Laufschienen und zwischen den Umlenkbereichen ein umlaufendes Palettenband angeordnet sind;
- Figur 2:: in dreidimensionaler Darstellung ein Palettenband- Abschnitt des in der Figur 1 schematisch dargestellten Palettenbandes, wobei zwei als Zugmittel dienende Gelenkketten-Abschnitte mit seitlich der Kettenglieder angeordneten Laufrollen und zwei zwischen den Gelenkketten angeordnete Paletten dargestellt sind;
- Figur 3:: in der Draufsicht ein Ausschnitt des in der Figur 2 dargestellten Palettenbandes;
- Figur 4:: in dreidimensionaler Darstellung die Fixierung der aus der Figur 3 bekannten Paletten mittels Befestigungsvorrichtungen an einer Gelenkkette mit zwischen den Kettenlaschen angeordneten Laufrollen; und
- Figur 5:: das Palettenband aus der Figur 4 mit horizontal geschnittener Gelenkkette in dreidimensionaler Darstellung.

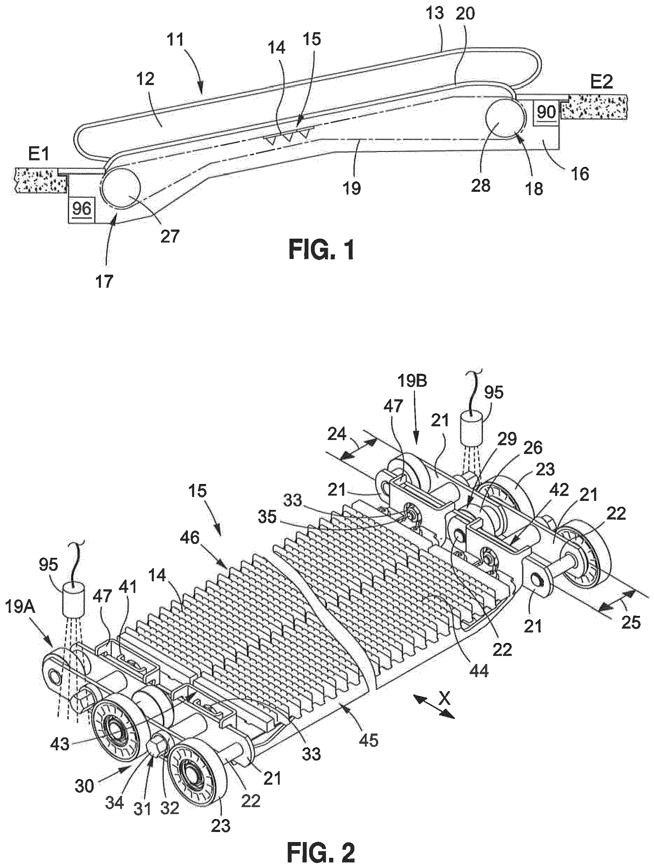

Figur 1 zeigt schematisch in der Seitenansicht einen Fahrsteig 11, der eine erste Etage E1 mit einer zweiten Etage E2 verbindet. Selbstverständlich könnte der Fahrsteig 11 auch zwei Stellen auf derselben Ebene miteinander verbinden, wie dies beispielsweise in langen Gängen von Flughäfen oft anzutreffen ist. Der Fahrsteig 11 weist ein Tragwerk 16 beziehungsweise Fachwerk 16 mit zwei Umlenkbereichen 17, 18 auf. In den Umlenkbereichen sind Kettenräder 27, 28 angeordnet, zwischen denen ein Palettenband 15 umlaufend geführt ist. Das Palettenband 15 weist Zugmittel 19 auf, an denen Paletten 14 angeordnet sind. Ein Handlauf 13 ist an einer Balustrade 12 angeordnet. Die Balustrade 12 ist am unteren Ende mittels eines Balustradensockels 20 mit dem Tragwerk 16 verbunden. Der nicht dargestellte Antrieb des Palettenbandes 15 wird mittels einer Fahrsteigsteuerungseinheit 90 angesteuert. Ferner ist im Tragwerk 16 beziehungsweise Fachwerk 16 eine Überwachungseinheit 96 angeordnet, welche mit den in der Figur 2 dargestellten Überwachungssensoren 95 verbunden ist.

Die Figur 2 zeigt einen Abschnitt in dreidimensionaler Darstellung des in der Figur 1 schematisch dargestellten Palettenbandes 15. Das Palettenband 15 weist zwei Zugmittel 19A, 19B auf. Die dargestellten Zugmittel 19A, 19B sind Abschnitte zweier Gelenkketten 19A, 19B, deren Kettenlaschen 21 mittels Kettenbolzen 22 miteinander zu zwei endlosen Gelenkketten 19A, 19B verbunden sind. Jeweils zwei Kettenlaschen 21 bilden entweder schmale Kettenglieder 24 oder breite Kettenglieder 25. Die Kettenbolzen 22 dienen nicht nur als Gelenkstellen 22, sondern gleichzeitig auch als Achsen 22 für Laufrollen 23. Diese Laufrollen 23 sind seitlich der Kettenglieder 24, 25 angeordnet und laufen auf nicht dargestellten Laufschienen, die im Tragwerk 16 des in Figur 1 gezeigten Fahrsteiges 11 angeordnet sind. Durch die Laufschienen werden die Laufrollen 23 und damit die Zugmittel 19A, 19B geführt und gegen die Schwerkraft abgestützt, so dass das Palettenband 15 nicht zwischen den beiden Umlenkbereichen 17, 18 durchhängt.

Die Kettenbolzen 22 dienen auch als Achsen 22 für Systemrollen 26, welche jeweils zwischen den beiden Kettenlaschen 21 der Kettenglieder 24, 25 angeordnet sind. Diese Systemrollen 26 können beispielsweise aus Metall gefertigt und wie in der Figur 1 dargestellt, in den Umlenkbereichen 17, 18 über Kettenräder 27, 28 geführt sein, wodurch die üblicherweise aus Kunststoff gefertigten Laufrollen 23 geschont werden, da die Laufflächen 29 der Systemrollen 26 einer hohen Flächenpressung durch die Kettenräder 27, 28 ausgesetzt sind.

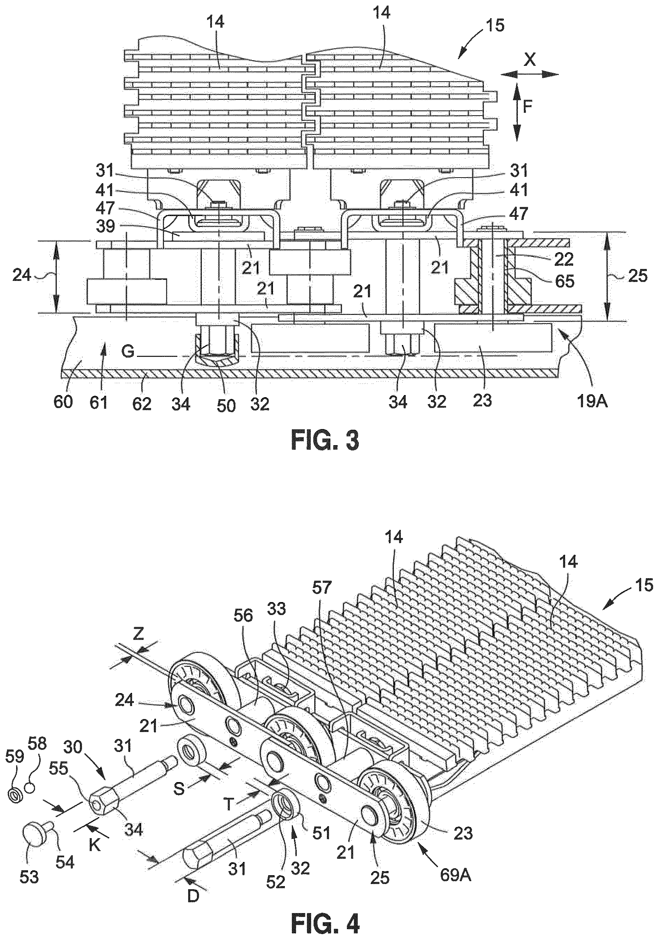

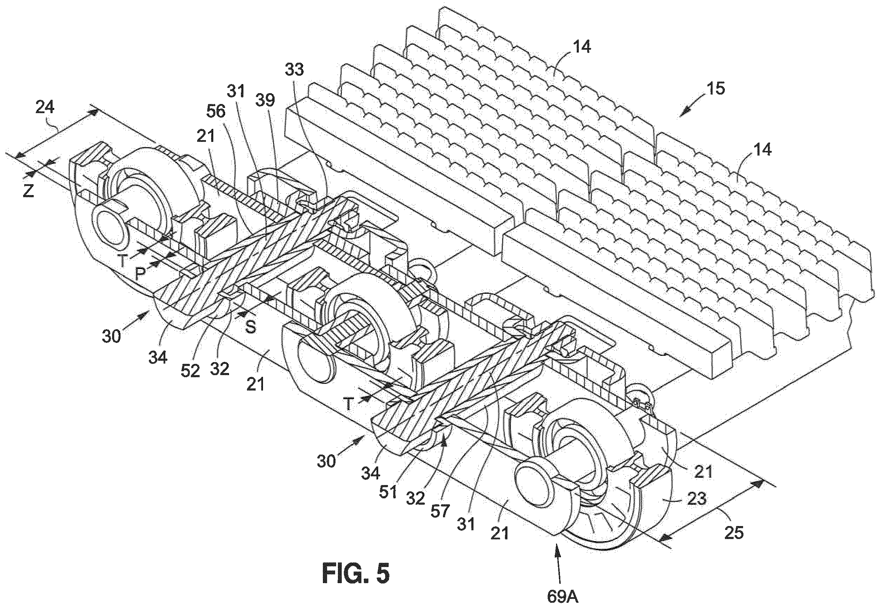

Zwischen den beiden Zugmitteln 19A, 19B sind eine Mehrzahl Paletten 14 angeordnet, wobei aus Gründen der Übersichtlichkeit in der Figur 2 nur zwei Paletten 14 dargestellt sind. An jeder der Kettenlaschen 21 ist jeweils zwischen zwei Gelenkstellen 22 eine Befestigungsvorrichtung 30 angeordnet, die die Gelenkkette 19A, 19B mit einer der Paletten 14 fest verbindet. Jede der Befestigungsvorrichtungen 30 umfasst im vorliegenden Ausführungsbeispiel einen Befestigungsbolzen 31, eine Topfscheibe 32 und eine Schraubenmutter 33. Damit die Palette 14 mit dem zugeordneten Kettenglied 24, 25 sicher verbunden ist, durchdringt der Befestigungsbolzen 31 die beiden Kettenlaschen 21 des Kettengliedes 24, 25 und eine Wange 41 der Palette 14, wobei der Bolzenkopf 34 des Befestigungsbolzens 31 seitlich aus dem Kettenglied 24, 25 ragt. Am anderen Ende des Befestigungsbolzens 31 ist ein in den Figuren 4 und 5 besser sichtbares Gewinde 35 vorhanden, welches die Schraubenmutter 33 aufnimmt. Die Topfscheibe 32 ist zwischen dem Bolzenkopf 34 und der seitlich außenliegenden Kettenlasche 21 des zugeordneten Kettengliedes 24, 25 angeordnet. Die dargestellten Bolzenköpfe 34 der Befestigungsbolzen 31 scheinen unterschiedliche Längen aufzuweisen. Tatsächlich sind aber alle verwendeten Befestigungsbolzen 31 identisch gefertigt. Der Eindruck der unterschiedlich langen Bolzenköpfe 34 liegt am speziellen Einbau der Topfscheiben 32, welcher im Zusammenhang mit der Beschreibung der Figuren 4 und 5 näher erläutert wird.

Die Palette 14 ist in ihrer Breite durch zwei parallele, sich in der vorgesehenen Bewegungsrichtung X der Palette 14 erstreckende Stirnseiten 42, 43 begrenzt. Zwischen den beiden Stirnseiten 42,43 erstreckt sich eine rechteckige Trittfläche 44. Die Oberseite der Trittfläche 44 weist ein Trittmuster in Form einer Reihe von parallelen, von der Vorderkante 45 zur Hinterkante 46 der Trittfläche 44 verlaufenden Rippen beziehungsweise Stege auf. Die Rippen erstrecken sich somit ebenfalls in der vorgesehenen Bewegungsrichtung X der Palette 14. Ferner sind die Rippen zum Eingriff in nicht dargestellte Kammstrukturen dimensioniert, die in den Umlenkbereichen 17, 18 des Fahrsteiges 11 angeordnet sind.

An jeder der beiden Stirnseiten 42, 43 ist mindestens eine Schulter 47 angeordnet. Dadurch können die Paletten 14 zwischen den beiden Gelenkketten 19A, 19B bequem angeordnet werden, da die Schultern 47 der zwischen den Gelenkketten 19A, 19B angeordneten Paletten 14 auf den Kettengliedern 24, 24 aufliegen und dadurch die Ausrichtungsarbeit der Palette 14 zum zugeordneten Kettenglied 24, 25 wesentlich reduziert wird, bis der Befestigungsbolzen 31 durch eine in der Figur 5 einsehbare Ausnehmung oder Bohrung der Wange 41 hindurchgesteckt werden kann. Die befestigten Paletten 14 verbinden die beiden Gelenkketten 19A, 19B somit quer zur vorgesehenen Bewegungsrichtung X miteinander.

Die Befestigungsvorrichtung 30 beziehungsweise der korrekte Sitz der Befestigungsbolzen 31 kann mittels mindestens eines im Fahrsteig angeordneten Überwachungssensors 95 überwacht werden. Der Überwachungssensor 95 wird ortsfest am nicht dargestellten Tragwerk befestigt, so dass sich bei einem vollständigen Umlauf des Palettenbandes 15 jede Befestigungsvorrichtung 30 am Überwachungssensor 95 vorbeibewegt hat. Zur Überwachung wird wie dargestellt, die Position eines Endes des Befestigungsbolzens 31, vorzugsweise des Bolzenkopfs 34, optisch oder mechanisch abgetastet. Die Mindestanzahl der Überwachungssensoren 95 pro Fahrsteig 11 richtet sich nach der Anzahl Reihen von Befestigungsvorrichtungen 30 und damit nach der Anzahl Zugmittel 19A, 19B eines Palettenbandes 15. Das Sensorsignal des Überwachungssensors 95 kann beispielsweise in einer Überwachungseinheit 96 mit einem Sollwert oder Sollzustand verglichen werden. Die Überwachungseinheit 96 ist vorzugsweise mit einer Fahrsteigsteuerungseinheit 90 (siehe Figur 1) verbunden, damit das Palettenband 15 des Fahrsteiges 11 durch diese gestoppt wird, wenn die Überwachungseinheit 96 eine gelockerte Befestigungsvorrichtung 30 ermittelt hat. Die Überwachungseinheit 96 kann selbstverständlich auch in der Fahrsteigsteuerungseinheit 90 integriert sein.

Figur 3 zeigt in der Draufsicht ein Ausschnitt des in der Figur 2 dargestellten Palettenbandes 15. Aufgrund der Draufsicht sind die Wange 41 und die Schulter 47 der Palette 14 besser zu sehen. Bei breiten Kettengliedern 25 liegt in montiertem Zustand die Wange 47 direkt an der ihr zugewandten Kettenlasche 21 der Gelenkkette 19A an. Bei den schmalen Kettengliedern 24 ist jeweils ein Distanzelement 39 zwischen der Wange 47 und der Kettenlasche 21 angeordnet, so dass an den schmalen Kettengliedern 24 und an den breiten Kettengliedern 25 identisch gefertigte Paletten 14 befestigt werden können.

Wie durch die strichpunktierte Linie G angedeutet, ragen alle Bolzenköpfe 34 der Befestigungsbolzen 31 gleich weit seitlich aus der Gelenkkette 19A, beziehungsweise aus dem Palettenband 15 heraus und zwar ungeachtet dessen, ob die Befestigungsbolzen 31 an schmalen Kettengliedern 24 oder an breiten Kettengliedern 25 montiert sind. Dies wird dadurch erreicht, dass die Topfscheibe 32 derart zwischen dem Bolzenkopf 34 des Befestigungsbolzens 31 und der der Palette 14 abgewandten Kettenlasche 21 der Gelenkkette 19A angeordnet ist, dass bei schmalen Kettengliedern 24 der in den Figuren 4 und 5 dargestellte Topfrand 51 und bei breiten Kettengliedern 25 der Topfbodenring 52 an der Kettenlasche 21 des jeweiligen Kettengliedes 24, 25 anliegt.

Zudem ist an der strichpunktierten Linie G problemlos zu erkennen, dass die Bolzenköpfe 34 der Befestigungsbolzen 31 die Laufrollen 23 seitlich überragen. Das Palettenband 15, dessen Laufrollen 23 zumindest im durch die Benutzer belasteten Vorlauf auf Laufschienen 60 abstützen, läuft üblicherweise problemlos geradeaus. Mit zunehmender Laufleistung werden die Bohrungen in den Kettenlaschen 21 , die Kettenbolzen 22 und die Lagerbuchsen 65 in den Gelenkketten 19A, 19B abgenutzt und es kann zu abweichenden Verlängerungen zwischen der linken Gelenkkette 19A und der rechten Gelenkkette 19B kommen. Diese minimen Unterschiede reichen aus, dass die zwischen den Gelenkketten 19A, 19B angeordneten Paletten 14 nicht mehr ganz orthogonal zur Bewegungsrichtung X angeordnet sind und dadurch ein Seitenlauf auftritt. Dieser Seitenlauf oder Schräglauf resultiert in einer Seitenkraft F, welcher die Laufrollen 23 von ihrer theoretischen Bewegungsrichtung X abweichen lässt.

Um in diesem Falle die Laufrollen 23 auf der Laufschiene 60 beziehungsweise auf der entsprechenden Lauffläche 61 zu führen, weist die Laufschiene 60 in Bewegungsrichtung X und damit in der Längserstreckung des Fahrsteiges 11 eine Führungsflanke 62 auf. Da die Bolzenköpfe 34 die Laufrollen 23 seitlich überragen, stehen sie an der Führungsflanke 62 an, bevor die Laufrollen 23 die Führungsflanke 62 berühren. Dadurch kann verhindert werden, dass die Laufrollen 23, welche in der Regel aus Kunststoff gefertigt sind, nicht durch die Führungsflanke 62 beschädigt werden. Die dabei auftretende Gleitreibung zwischen dem Befestigungsbolzen 31 und der Führungsflanke 62 kann minimiert werden, wenn ein Ende des Befestigungsbolzens 31, beispielsweise der Bolzenkopf 34 mit einem Gleitlack beschichtet, oder wie dargestellt, mit einem Gleitelement 50 versehen wird. Selbstverständlich muss nicht jeder Bolzenkopf 34 eines Palettenbandes 15 mit einem Gleitelement 50 versehen sein. Selbstverständlich können auch andere Bauteile des Fahrsteiges 11 als Führungsflanken 62 für die Befestigungsbolzen 31 dienen, beispielsweise an den Laufschienen 60 oder im Tragwerk 16 angeordnete Führungsleisten, ein Sockelblech des in der Figur 1 dargestellten Balustradensockels 20 und dergleichen mehr.

Die Montage der Befestigungsvorrichtung 30 und deren Elemente Befestigungsbolzen 31, Topfscheibe 32 und Schraubenmutter 33 sind ausführlich in den Figuren 4 und 5 dargestellt, weshalb diese nachfolgend gemeinsam beschrieben und dieselben Bezugszeichen verwendet werden.

Die Figur 4 zeigt in dreidimensionaler Darstellung die Fixierung der aus der Figur 3 bekannten Paletten 14 und Befestigungsvorrichtungen 30, an einer Gelenkkette 69A mit zwischen den Kettenlaschen 21 angeordneten Laufrollen 23. Da sich dieses Ausführungsbeispiel nur in der Anordnung der Laufrollen 23 in der Gelenkkette 69A vom Ausführungsbeispiel der Figuren 2 und 3 unterscheidet, werden für gleiche Teile auch dieselben Bezugszeichen verwendet. Die Figur 5 zeigt ferner das Palettenband 15 aus der Figur 4 mit geschnittener Gelenkkette 69A und geschnittenen Befestigungsvorrichtungen 30 in dreidimensionaler Darstellung.

Anhand der Figur 4 ist der richtige Einbau der Topfscheibe 32 gut ersichtlich. Die Topfscheibe weist einen Topfbodenring 52 auf, dem ein umlaufender Topfrand 51 anschließt. Der Innendurchmesser D des Topfrandes 51 ist grösser als der Außendurchmesser K (im vorliegenden Ausführungsbeispiel das Eckmaß des sechskantigen Bolzenkopfs 34) des in montiertem Zustand am Topfbodenring 52 anliegenden Bereichs des Befestigungsbolzens 31. Die Innenhöhe T des Topfrandes 51 entspricht der Dicke Z zumindest einer Kettenlasche 21 des Kettengliedes 24, 25. Die Innenhöhe T darf aber nicht mit der Stärke S der Topfscheibe 32 verwechselt werden. Die Stärke S entspricht der Summe aus der Innenhöhe T und Topfbodenstärke P (siehe Figur 5).

Damit alle Befestigungsbolzen auf einer Linie G enden (siehe Figur 3), kann die Topfscheibe 32 derart zwischen dem Bolzenkopf 34 des Befestigungsbolzens 31 und der der Palette 14 abgewandten Kettenlasche 21 der Gelenkkette 69A angeordnet werden, dass bei schmalen Kettengliedern 24 der Topfrand 51 und bei breiten Kettengliedern 25 der Topfbodenring 52 an der Kettenlasche 21 des jeweiligen Kettengliedes 24, 25 anliegt.

In der Figur 4 sind ferner zwei weitere Ausführungsvarianten eines Gleitelements dargestellt. Die erste dieser Varianten weist ein pilzförmiges Gleitelement 53 mit einem Dorn 54 auf, welcher Dorn 54 in eine Bohrung 55 gepresst werden kann, die an der Stirnseite des Bolzenkopfs 34 angeordnet ist. Die zweite dieser Varianten umfasst eine Rollkugel 58, die beispielsweise eine hartverchromte Stahlkugel ist, und einen, beispielsweise aus Messing gefertigten Ringstopfen 59. Diese beiden Teile werden derart in die Bohrung 55 eingelassen, dass die Rollkugel 58 leicht aus dem Ringstopfen 59 und damit stirnseitig aus den Bolzenkopf 34 herausragt, aber durch den Ringstopfen 59 in der Bohrung 55 gefangen ist. Wenn die Rollkugel 58 nun eine Führungsflanke berührt, rollt sie auf dieser ab und zwingt das Palettenband 15 entlang der Führungsflanke zu rollen.

Wie insbesondere in der Figur 5 erkennbar ist, steckt der montierte Befestigungsbolzen 31 in einer Stützhülse 56, 57, welche die beiden Kettenlaschen 21 eines Kettengliedes 24, 25 miteinander verbindet. Diese Stützhülse 56, 57 dient dazu, dass beim Festziehen der Schraubenmutter 33 am Befestigungsbolzen 31 eine Vorspannkraft innerhalb dieser Schraubenverbindung beziehungsweise Befestigungseinrichtung 30 erzeugt und aufrechterhalten werden kann. Ohne die Stützhülse 56, 57 würden die beiden Kettenlaschen 21 in der Mitte gegeneinander gezogen und dadurch das Kettenglied 24, 25 plastisch deformiert. Da die Gelenkkette 69A schmale Kettenglieder 24 und breite Kettenglieder 25 aufweist, müssen im vorliegenden Beispiel auch die Stützhülsen 56, 57 unterschiedliche Längen aufweisen. Die zu den schmalen Kettengliedern 24 passende Stützhülse 56 dient gleichzeitig der Befestigung des Distanzelements 39 am schmalen Kettenglied 24, da sie in das Distanzelement 39 hineinragt.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem andere Typen von Gelenkketten wie beispielsweise Rollenketten, Zahnketten, Flyerketten und dergleichen mehr als Zugmittel verwendet werden. Selbstverständlich können Paletten 14 auch an Gelenkketten mit drei unterschiedlich breiten Kettengliedern mit der erfindungsgemässen Befestigungsvorrichtung 30 befestigt werden, sofern die in Figur 5 gekennzeichnete Topfbodenstärke P gleich der Dicke Z einer Kettenlasche 21 ist. Eine mögliche Abfolge wäre dann, dass bei den breitesten Kettengliedern ein Befestigungsbolzen 31 ohne Topfscheibe 32, bei mittleren Kettengliedern ein Befestigungsbolzen 31 mit Topfscheibe 32, deren Topfbodenring 51 an der Kettenlasche 21 anliegt, und bei schmalen Kettengliedern ein Befestigungsbolzen 31 mit Topfscheibe 32, deren Topfrand 52 an der Kettenlasche 21 anliegt, verwendet wird.

Ferner sind nicht zwingend zwei seitlich der Paletten 14 angeordnete Zugmittel 19A, 19B, 69A erforderlich. Ein Palettenband 15 kann auch nur ein Zugmittel 19A, 19B, 69A aufweisen, welches bezogen auf die Breite des Palettenbandes 15 vorzugsweise mittig der Paletten 14 angeordnet ist.

Auch wenn aus fertigungstechnischer Sicht und wie in den Ausführungsbeispielen dargestellt, eine rotationssymmetrische Ausgestaltung der Topfscheibe vorteilhaft erscheint, muss die Topfscheibe nicht zwingend kreisrund ausgebildet sein. Sie kann beispielsweise auch einen Topfbodenring mit einer dreieckigen, quadratischen, rechteckigen, vieleckigen oder elliptischen Grundfläche aufweisen, wobei der Topfrand auch nicht zwingend exakt an den Rändern dieser Grundfläche des Topfbodenrings umlaufen muss.

## Patentansprüche

1. Palettenband (15) eines Fahrsteiges (11) mit in Bewegungsrichtung (X) hintereinander angeordneten Paletten (14) die zwischen zwei zueinander parallel verlaufenden, aus unterschiedlich breiten Kettengliedern (24, 25) gebildeten Gelenkketten (19A, 19B, 69A) angeordnet sind, wobei jedes Kettenglied (24, 25) mittels mindestens einer Befestigungsvorrichtung (30) mit einer der Paletten (14) verbunden ist, wobei die Befestigungsvorrichtung (30) einen Befestigungsbolzen (31) und eine Topfscheibe (32) aufweist, wobei die Topfscheibe (32) einen Topfbodenring (52) und einen den Topfbodenring (52) umlaufenden Topfrand (51) beinhaltet, und **dadurch gekennzeichnet, dass** die Innenhöhe (T) des Topfrandes (51) der Dicke (Z) zumindest einer Kettenlasche (21) des Kettengliedes (24, 25) entspricht und der Innendurchmesser (D) des Topfrandes (51) grösser ist als der Außendurchmesser (K) des in montiertem Zustand am Topfbodenring (52) anliegenden Bereichs des Befestigungsbolzens (31), und dass die Topfscheibe (32) derart zwischen dem Bolzenkopf (34) des Befestigungsbolzens (31) und der der Palette (14) abgewandten Kettenlasche (21) der Gelenkkette (19A, 19B, 69A) angeordnet ist, dass bei schmalen Kettengliedern (24) der Topfrand (51) und bei breiten Kettengliedern (25) der Topfbodenring (52) an der Kettenlasche (21) des jeweiligen Kettengliedes (24, 25) anliegt.

2. Palettenband (15) nach Anspruch 1, wobei in montiertem Zustand der Befestigungsbolzen (31) zumindest zwei parallel zueinander angeordnete Kettenlaschen (21) des mit der Palette (14) zu verbindenden Kettengliedes (24, 25) durchdringt.

3. Palettenband (15) nach Anspruch 1 oder 2, wobei die Gelenkkette (19A, 19B, 69A) alternierend aus schmalen und breiten Kettengliedern (24, 25) gebildet ist und die Topfscheiben (32) derart an der Gelenkkette (19A, 19B, 69A) alternieren angeordnet sind, dass bei schmalen Kettengliedern (24, 25) der Topfrand (51) und bei breiten Kettengliedern (24, 25) der Topfbodenring (52) an der Kettenlasche (21) des jeweiligen Kettengliedes (24, 25) anliegt.

4. Palettenband (15) nach einem der Ansprüche 1 bis 3, wobei der Befestigungsbolzen (31) eine dem Kettenglied (24, 25) zugewandte Wange (41) der an diesem Kettenglied (24, 25) befestigten Palette (14) durchdringt oder in eine Bohrung der an diesem Kettenglied (24, 25) befestigten Palette (14) hineinragt.

5. Palettenband (15) nach einem der Ansprüche 1 bis 4, wobei zwischen den schmalen Kettengliedern (24) und den daran befestigten Paletten (14) jeweils ein Distanzelement (39) angeordnet ist, dessen Dicke der Dicke (Z) einer Kettenlasche (21) entspricht.

6. Palettenband (15) nach einem der Ansprüche 1 bis 5, wobei zwischen den beiden außenliegenden Kettenlaschen (21) des jeweiligen Kettengliedes (24, 25) jeweils mindestens eine Stützhülse (56, 57) angeordnet ist, durch deren Bohrung der Befestigungsbolzen (31) hindurchsteckbar ist.

7. Palettenband (15) nach Anspruch 6, wobei das Distanzelement (39) mittels der Stützhülse (56) am Kettenglied (24) befestigbar ist.

8. Palettenband (15) nach einem der Ansprüche 1 bis 7, wobei jede der Gelenkketten (19A, 19B, 69A) Laufrollen (23) aufweist, die zwischen den Kettenlaschen (21) an den Gelenkstellen (22) der Gelenkkette (19A, 19B, 69A) angeordnet sind.

9. Palettenband (15) nach einem der Ansprüche 1 bis 8, wobei jede der Gelenkketten (19A, 19B, 69A) Laufrollen (23) aufweist, die an der den Paletten (14) abgewandten Außenseite der Kettenglieder (24, 25) an den Gelenkstellen (22) angeordnet sind, wobei die Befestigungsbolzen (31) seitlich die Laufrollen (23) überragen.

10. Palettenband (15) nach einem der Ansprüche 1 bis 9, wobei ein Gleitelement (50, 53) mit niedrigem Gleitreibungskoeffizient an einem Bolzenende (34) mindestens eines Befestigungsbolzens (31) angeordnet ist.

11. Fahrsteig (11) mit einem Palettenband (15) nach einem der Ansprüche 1 bis 10.

12. Verfahren zur Überwachung eines Palettenbandes (15) eines Fahrsteiges (11) nach einem der Ansprüche 1 bis 10, **dadurch gekennzeichnet, dass** mindestens ein Überwachungssensor (95) vorhanden ist, durch welchen die Position eines Endes des Befestigungsbolzen (31) relativ zur Position einer Kettenlasche (21) des zugehörenden Kettengliedes (24, 25) erfasst wird und dass das Sensorsignal in einer Überwachungseinheit (96) mit einem Sollwert verglichen wird.

13. Verfahren zur Überwachung eines Palettenbandes (15) nach Anspruch 12, wobei der mindestens eine Überwachungssensor (95) eine CCD- Kamera, eine TOF-Kamera, eine Lichtschranke, ein Tastschalter, eine Laserabtasteinrichtungen, ein induktiver Näherungsschalter, eine Hochfrequenzantenne oder ein RFID- Lesegerät ist.

14. Verfahren zur Modernisierung eines Fahrsteiges (11) durch Ersetzen des bestehenden Palettenbandes durch ein Palettenband (15) nach einem der Ansprüche 1 bis 10.

## Claims

1. Plate belt (15) of a moving walkway (11) with plates (14), which are arranged in succession in movement direction (X) and between two mutually parallel link chains (19A, 19B, 69A) formed by chain links (24, 25) of different width, wherein each chain link (24, 25) is connected with one of the plates (14) by means of at least one fastening device (30), wherein the fastening device (30) comprises a fastening bolt (31) and a cup washer (32), wherein the cup washer (32) has a cup base ring (52) and a cup collar (51) encircling the cup base ring (52), **characterised in that** the inner height (T) of the cup collar (51) corresponds with the thickness (Z) of at least one chain link strap (21) of the chain link (24, 25) and wherein the inner diameter (D) of the cup collar (51) is greater than the outer diameter (K) of the region of the fastening bolt (31) bearing against the cup base ring (52) in the mounted state, and wherein the cup washer (32) is so arranged between the bolt head (34) of the fastening bolt (31) and the chain link strap (21) of the link chain (19A, 19B, 69A) facing away from the plate (14), that the cup collar (51) bears against the chain link strap (21) of the respective chain link (24, 25) in the case of narrow chain links (24) and the cup base ring (52) bears against the chain link strap (21) of the respective chain link (24, 25) in the case of wide chain links (24).

2. Plate belt (15) according to claim 1, wherein in the mounted state the fastening bolt (31) penetrates at least two mutually parallel chain link straps (21) of the chain link (24, 25) which is connectable with the plate (14).

3. Plate belt (15) according to any one of claims 1 or 2, wherein the link chain (19A, 19B, 69A) is formed in alternation from narrow and wide chain links (24, 25) and the cup washers (32) are so arranged in alternation at the link chain (19A, 19B, 69A) that the cup collar (51) bears against the chain link strap (21) of the respective link chain (24, 25) in the case of narrow chain links (24, 25) and the cup base ring (52) bears against the chain link strap (21) of the respective chain link (24, 25) in the case of wide chain links (24, 25).

4. Plate belt (15) according to any one of claims 1 to 3, wherein the fastening bolt (31) penetrates a cheek (41), which faces the chain link (24, 25), of the plate (14) fastened to this chain link (24, 25) or penetrates into a bore of the plate (14) fastened to this chain link (24, 25).

5. Plate belt (15) according to any one of claims 1 to 4, wherein a respective spacer (39), the thickness of which corresponds with the thickness (Z) of a chain link strap (21), is arranged between the narrow chain links (24) and the plates (14) fastened thereto.

6. Plate belt (15) according to any one of claims 1 to 5, wherein at least one respective support sleeve (56, 57), through the bore of which the fastening bolt (31) can be inserted, is arranged between the two outwardly disposed chain link straps (21) of the respective chain link (24, 25).

7. Plate belt (15) according to claim 6, wherein the spacer (39) is fastenable to the chain link (24) by means of the support sleeve (56).

8. Plate belt (15) according to any one of claims 1 to 7, wherein each of the link chains (19A, 19B, 69A) comprises guide rollers (23) arranged between the chain link straps (21) at the articulation points (22) of the link chain (19A, 19B, 69A).

9. Plate belt (15) according to any one of claims 1 to 8, wherein each of the link chains (19A, 19B, 69A) comprises guide rollers (23) arranged at the outer side, which is remote from the plates (14), of the chain links (24, 25) at the articulation points (2), wherein the fastening bolts (31) project laterally beyond the guide rollers (23).

10. Plate belt (15) according to any one of claims 1 to 9, wherein a slide element (50, 53) with a low coefficient of slide friction is arranged at a bolt end (34) of at least one fastening bolt (31).

11. Moving walkway (11) with a plate belt (15) according to any one of claims 1 to 10.

12. Method of monitoring a plate belt (15) of a moving walkway (11) according to any one of claims 1 to 10, **characterised in that** at least one monitoring sensor (95) is present by which the position of an end of the fastening bolt (31) relative to the position of a chain link strap (21) of the associated chain link (24, 25) is detected and that the sensor signal is compared in a monitoring unit (6) with a target value.

13. Method of monitoring a plate belt (15) according to claim 12, wherein the at least one monitoring sensor (95) is a CCD camera, a TOF camera, a light barrier, a touch switch, a laser scanner, an inductive proximity switch, a high-frequency antenna or an RFID reader.

14. Method of modernising of a moving walkway (11) by replacement of the existing plate belt by a plate belt (15) according to any one of claims 1 to 10.

## Revendications

1. Bande à palettes (15) d'un trottoir roulant (11) comportant des palettes (14) qui sont disposées les unes à la suite des autres dans la direction de déplacement (X) et qui sont disposées entre deux chaînes à articulations (19A, 19B, 69A) s'étendant parallèlement entre elles et constituées de maillons de chaîne (24, 25) de largeurs différentes, étant précisé que chaque maillon de chaîne (24, 25) est relié à une des palettes (14) par au moins un dispositif de fixation (30), que le dispositif de fixation (30) comporte un boulon de fixation (31) et une rondelle en cuvette (32), que la rondelle en cuvette (32) comprend un anneau de fond de cuvette (52) et un bord de cuvette (51) entourant l'anneau de fond de cuvette (52), **caractérisée en ce que** la hauteur intérieure (T) du bord de cuvette (51) correspond à l'épaisseur (Z) d'au moins une attache de chaîne (21) du maillon de chaîne (24, 25) et le diamètre intérieur (D) du bord de cuvette (51) est plus grand que le diamètre extérieur (K) de la région du boulon de fixation (31) qui est en appui à l'état monté sur l'anneau de fond de cuvette (52), et **en ce que** la rondelle en cuvette (32) est disposée entre la tête (34) du boulon de fixation (31) et l'attache de chaîne (21), opposée à la palette (14), de la chaîne à articulations (19A, 19B, 69A) de telle sorte que le bord de cuvette (51) pour les maillons de chaîne étroits (24) et l'anneau de fond de cuvette (52) pour les maillons de chaîne large (25) sont en appui sur l'attache de chaîne (21) du maillon de chaîne respectif (24, 25).

2. Bande à palettes (15) selon la revendication 1, étant précisé qu'à l'état monté, le boulon de fixation (31) pénètre dans au moins deux attaches de chaîne (21) disposées parallèlement entre elles du maillon de chaîne (24, 25) à relier à la palette (14).

3. Bande à palettes (15) selon la revendication 1 ou 2, étant précisé que la chaîne à articulations (19A, 19B, 69A) est formée alternativement de maillons de chaîne (24, 25) étroits et larges et les rondelles en cuvette (32) sont disposées alternativement sur la chaîne à articulations (19A, 19B, 69A) de telle sorte que le bord de cuvette (51) pour les maillons de chaîne (24, 25) étroits et l'anneau de fond de cuvette (52) pour les maillons de chaîne (24, 25) larges sont en appui sur l'attache de chaîne (21) du maillon de chaîne respectif (24, 25).

4. Bande à palettes (15) selon l'une des revendications 1 à 3, étant précisé que le boulon de fixation (31) pénètre dans une joue (41), orientée vers le maillon de chaîne (24, 25), de la palette (14) fixée à ce maillon de chaîne (24, 25) ou fait saillie dans un trou de la palette (14) fixée à ce maillon de chaîne (24, 25).

5. Bande à palettes (15) selon l'une des revendications 1 à 4, étant précisé qu'un élément d'écartement (39) est disposé entre chacun des maillons de chaîne étroits (24) et la palette (14) fixée à celui-ci, élément d'écartement dont l'épaisseur correspond à l'épaisseur (Z) d'une attache de chaîne (21).

6. Bande à palettes (15) selon l'une des revendications 1 à 5, étant précisé qu'au moins un manchon de support (56, 57) est disposé entre les deux attaches de chaîne (21) externes du maillon de chaîne respectif (24, 25), manchon dont le trou peut être traversé par le boulon de fixation (31).

7. Bande à palettes (15) selon la revendication 6, étant précisé que l'élément d'écartement (39) peut être fixé au maillon de chaîne (24) au moyen du manchon de support (56).

8. Bande à palettes (15) selon l'une des revendications 1 à 7, étant précisé que chacune des chaînes à articulations (19A, 19B, 69A) comporte des galets de roulement (23) qui sont disposés entre les attaches de chaîne (21) au niveau des points d'articulation (22) de la chaîne à articulations (19A, 19B, 69A).

9. Bande à palettes (15) selon l'une des revendications 1 à 8, étant précisé que chacune des chaînes à articulations (19A, 19B, 69A) comporte des galets de roulement (23) qui sont disposés au niveau des points d'articulation (22) du côté extérieur, opposé aux palettes (14), des maillons de chaîne (24, 25), étant précisé que les boulons de fixation (31) font saillie latéralement des galets de roulement (23).

10. Bande à palettes (15) selon l'une des revendications 1 à 9, étant précisé qu'un élément coulissant (50, 53) de faible coefficient de frottement dynamique est disposé à une extrémité (34) d'au moins un boulon de fixation (31).

11. Trottoir roulant (11) comportant une bande à palettes (15) selon l'une des revendications 1 à 10.

12. Procédé de surveillance d'une bande à palettes (15) d'un trottoir roulant (11) selon l'une des revendications 1 à 10, **caractérisé en ce qu'**au moins un capteur de surveillance (95) est prévu, qui détecte la position d'une extrémité du boulon de fixation (31) par rapport à la position d'une attache de chaîne (21) du maillon de chaîne correspondant (24, 25), et **en ce que** le signal de capteur est comparé à une valeur de consigne dans une unité de surveillance (96).

13. Procédé de surveillance d'une bande à palettes (15) selon la revendication 12, étant précisé que l'au moins un capteur de surveillance (95) est une caméra CCD, une caméra TOF, une barrière lumineuse, un bouton poussoir, un scanner laser, un détecteur de proximité inductif, une antenne à haute fréquence ou un lecteur RFID.

14. Procédé de modernisation d'un trottoir roulant (11) visant à remplacer la bande à palettes existante par une bande à palettes (15) selon l'une des revendications 1 à 10.
